# EUROPÄISCHE PATENTSCHRIFT

(11) **EP 2 848 853 B1**
(45) Veröffentlichungstag und Bekanntmachung des Hinweises auf die Patenterteilung: **17.05.2017**
(21) Anmeldenummer: 13184264.3
(22) Anmeldetag: 13.09.2013
(51) Int. Cl.: F16P 3/16

(54) **Vorrichtung zur Arretierung eines verschiebbaren Bauteils**
Device for locking a movable component
Dispositif de blocage d'un élément de construction mobile

(43) Veröffentlichungstag der Anmeldung: 18.03.2015
(73) Patentinhaber: Strasser Maschinenbau GmbH, 88276 Berg/Ravensburg (DE)
(72) Erfinder: Strasser, Karl-Heinz, 88276 Berg (DE)
(74) Vertreter: Engelhardt & Engelhardt

(56) Entgegenhaltungen:
- DE-A1-102011 082 883
- US-A- 4 030 364
- US-A- 4 036 343
- US-A- 4 527 684

## Beschreibung

Die Erfindung bezieht sich auf eine Vorrichtung zur Arretierung eines verschiebbaren Bauteils, insbesondere vor einer abzuschirmenden Arbeits- oder Zutrittsstelle angeordneten Schutz- oder Schiebetür, nach dem Oberbegriff des Patentanspruches 1.

Aus der EP 2 562 464 A1 kann eine solche Arretierungsvorrichtung zur Festsetzung eines Bauteils, das zwischen einer oder zwei Profilschienen beweglich gehalten ist, entnommen werden. Es ist nämlich aus Sicherheitsgründen wünschenswert, wenn eine Arbeitsstelle an einer Werkzeugmaschine oder der Zutrittsbereich, beispielsweise eines Aufzuges oder einer Schiebetür an einem Zug festgesetzt ist, wenn ein Hindernis in den Arbeits- oder Zutrittsbereich unbeabsichtigt eingeführt ist, um Verletzungen oder Beschädigungen an den jeweiligen Bauteil oder Hindernis zu vermeiden.

Um die Arretierung des Bauteils, insbesondere der Schiebe- oder Schutztür, zu erreichen, ist eine Führungssäule vorgesehen, die parallel zu den Profilschienen verläuft und die mit einem Sperrglied im Arretierungszustand des Bauteils zusammenwirkt. Das Sperrglied umgreift dabei ganz oder teilweise die Führungssäule und steht in trieblicher Wirkverbindung mit einer an dem Bauteil gelenkig gelagerten Kontaktleiste. Trifft die Kontaktleiste auf ein Hindernis, während das Bauteil zugestellt wird, wird über mechanische Verbindungselemente das Sperrglied aktiviert, indem die Kontaktleiste verschwenkt ist. Durch die Verschwenkung der Kontaktleiste werden nämlich die mechanischen Verbindungselemente aus Ihrer Ausgangsposition in einer Endposition überführt und diese Bewegung ist an das Sperrglied weitergeleitet, so dass dieses aus einer die Führungssäule umgreifenden Stellung in eine mit der Führungssäule reibschlüssig zusammenwirkenden Stellung überführt ist. Folglich entsteht zwischen dem Sperrglied und der Führungssäule eine triebliche oder kraftschlüssige Wirkverbindung, durch die das Bauteil zuverlässig gestoppt ist, um das eingeführte Hindernis nicht zu beschädigen oder falls es sich beispielsweise um einen menschlichen Arm handeln sollte, diesen nicht zu verletzen.

Aus US 4 527 684 ist eine Schutzvorrichtung zum Abschirmen einer Maschine bekannt geworden, durch die ein Hindernis, das in den Gefahrenbereich hineinragt, erfasst ist. Eine schwimmend gelagerte Kontaktleiste ist über zwei V-förmig zueinander ausgerichteten Armen an der Unterkante einer Schiebetür eingehängt. Trifft die Kontaktleiste der Schiebetür auf ein Hindernis ist die Kontaktleiste seitlich in Richtung der Schiebetür angehoben und ein Signal zur Betätigung einer Bremse ist generiert, so dass mittels der Bremse das Bauteil in seiner Zustellbewegung gestoppt ist.

In der US 4 036 343 ist eine Notfallbremse einer Presse offenbart. Zur Abschirmung des Gefahrenbereiches ist eine horizontal bewegliche Schutzvorrichtung vorgesehen, an deren Unterseite eine Kontaktleiste zur Betätigung der Notfallbremse angeordnet ist. Die Kontaktleiste ist mittels Stäben an der Unterseite der Schutzvorrichtung aufgehängt. Trifft die Kontaktleiste bei Verfahren der Schutzvorrichtung auf ein Hindernis, ist die Kontaktleiste durch das Hindernis angehoben und betätigt ein oder mehrere Schalter, ist einen Notfallbremsvorgang ausgelöst und die Bewegung der Schutzvorrichtung abgebrochen.

Solche Arretierungsvorrichtungen haben sich in der Praxis bewährt, jedoch hat sich herausgestellt, dass solche Bauteile ausschließlich mit einer linearen Kontur ausgebildet sein können, die zwar Ecken aufweisen kann, jedoch für jede Kontaktleiste eine nach außen gerichtete Bewegung erfolgt. Wenn nämlich die Kontaktleisten nach innen verschwenken, dann entstehen in den Eckbereichen Überschneidungen, durch die sich die Kontaktleisten gegebenenfalls behindern und somit die Arretierung des Bauteils verhindert ist.

Ferner kann bei einer verschwenkbar aufgehängten Kontaktleiste ein Anschlag oder ein Halteelement im Rahmen der Vorrichtung vorgesehen sein, durch die die Kontaktleiste, beispielsweise in der Endstellung des Bauteils blockiert ist. Durch einen solchen Anschlag oder ein Halteelement ist folglich das Bauteil zuverlässig und dauerhaft in seiner Endstellung fixiert, so dass auch durch mechanisch auf das Bauteil einwirkende Kräfte dieses nicht gewaltsam aufgeschoben werden kann, ohne die Kontaktleiste bzw. deren Aufhängung zu zerstören.

Darüber hinaus sind die Kontaktleisten verschwenkbar an der Unterkante des Bauteils angelenkt, so dass der zur Verfügung stehende Raum für die Rückholung der Kontaktleiste erheblich klein bemessen ist, da die Verschwenkung der Kontaktleiste um ihre jeweilige Drehachse oder Aufhängepunkte eine tangentiale Rückführung der der Kontaktleiste in Richtung des Bauteils bewirkt. Folglich können die Bauteile ausschließlich mit einer bestimmten Zustellgeschwindigkeit gefahren werden, um die Verschwenkung der Kontaktleiste aus dem Bereich des Hindernisses und während des Arretierungsvorganges des Bauteils zu erreichen.

Es ist daher Aufgabe der Erfindung, eine Vorrichtung der eingangs genannten Art zur Arretierung eines Bauteils zur Verfügung zu stellen, durch die eine Aufhängung der Kontaktleiste an dem Bauteil erreicht ist, um die Kontaktleiste möglichst in der von dem Bauteil gebildeten Ebene aus dem Bereich des Hindernisses zu bewegen. Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwei oder mehrere Haltearme paarweise angeordnet sind und dass ein Haltearmpaar einen gemeinsamen Knotenpunkt aufweist, mit dem das jeweilige Haltearmpaar bzw. verbunden ist, ist erreicht, dass die Kontaktleiste in der von dem Bauteil gebildeten Ebene in Richtung des Bauteils beweglich ist, sobald ein Hindernis in den Arbeits- oder Zutrittsbereich eindringt.

Ein weiterer Vorteil der scherenartigen Anordnung von Halte- und Führungsarme zwischen der Kontaktleiste und dem Bauteil besteht darin, dass die Kontaktleiste in ihrer Position mit einer ausreichenden Sicherheit gehalten ist, auch wenn seitliche Kräfte auf die Kontaktleiste einwirken sollen. Des Weiteren werden die auf die gesamte Länge der Kontaktleiste einwirkenden Kräfte, die beispielsweise von einem Hindernis ausgeübt werden, durch diese scherenartige Aufhängung der Kontaktleiste an dem Bauteil zuverlässig aufgenommen und über die gesamte Länge der Kontaktleiste, und zwar auch wenn diese eine wellenförmige oder eckige Kontur aufweist, aufgenommen, da die Aufhängung der Kontaktleiste eine steife Konstruktion darstellt. Folglich kann das mechanische Arretierungssystem zuverlässig ausgelöst werden, unabhängig von der Position des Hindernisses, also auch, wenn das Hindernis in einem Randbereich des Bauteils vorhanden sein sollte. Gerade wenn individuelle Konturverläufe notwendig oder gewünscht sind, kann die steife Aufhängung der Kontaktleiste an dem Bauteile diese Konturverläufe nachbilden, ohne dass die zuverlässige Arretierungsfunktion der Kontaktleiste verlorengeht.

In der Zeichnung ist ein erfindungsgemäßes Ausführungsbeispiel dargestellt, das nachfolgend näher erläutert ist. Im Einzelnen zeigt:
- Figur 1a: eine Vorrichtung zur Arretierung eines zwischen zwei Profilschienen beweglich verfahrbaren Bauteils, an dessen Unterseite eine Kontaktleistevorgesehen ist, mit einer Servoeinrichtung, durch die das Bauteil bewegt ist und mit einer Führungssäule, durch die über ein Sperrglied das Bauteil im Betätigungsfalle der Kontaktleiste arretiert ist, in Vorderansicht,
- Figur 1b: die Vorrichtung gemäß Figur 1a, im betätigten bzw. arretiertem Zustand,
- Figur 2a: ein Ausschnitt aus der Vorrichtung gemäß Figur 1a, mit der scherenartigen Aufhängung der Kontaktleiste,
- Figur 2b: die Vorrichtung gemäß Figur 1b, beim erfolgten Kontakt der Kontaktleiste mit einem Hindernis,
- Figur3: die Vorrichtung gemäß Figur 1a, mit einer kolbenartigen Aufhängung der Kontaktleiste,
- Figur 4a: die Vorrichtung gemäß Figur 1a mit einer Parallelogrammaufhängung der Kontaktleiste,
- Figur 4b: die Vorrichtung gemäß Figur 1 a mit einer wellenförmig ausgestalteten Unterkante des Bauteils und einer daran angepassten Kontaktleiste, in perspektivischer Ansicht und
- Figur 4c: die Vorrichtung gemäß Figur 1a mit einem winklig ausgestalteten Bauteil und einer daran angepassten Kontaktleiste.

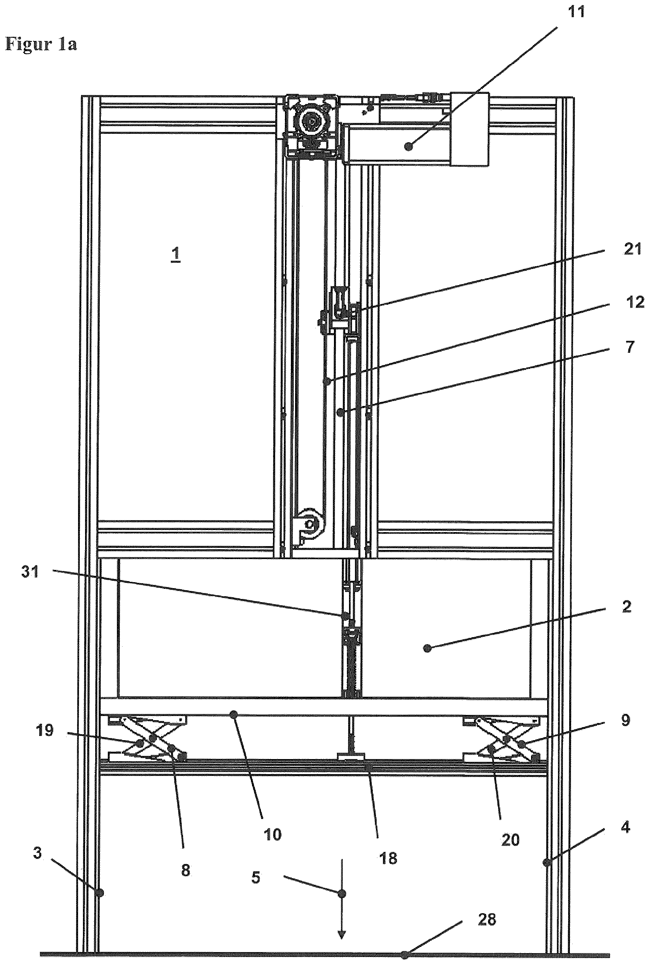

In den Figuren 1a bis 4c ist eine Vorrichtung 1 zur Arretierung eines verschiebbaren Bauteils 2, insbesondere einer vor einer abzuschirmenden Arbeits- oder Zutrittsstelle einer Werkzeugmaschine bzw. eines Zugangs angeordneten Schiebe- oder Schutztür zu entnehmen. Das Bauteil 2 bewegt sich in der mit der Bezugsziffer 5 gekennzeichneten vertikalen Verstellrichtung 5, um die Arbeitsstelle an der Werkzeugmaschine, an einem Förderband oder einer sonstigen maschinellen Anlage während des Bearbeitungsprozesses nach außen zu verschließen, so dass diese nicht zugänglich und insoweit geschützt ist. Das Bauteil 2 ist selbstverständlich auch in der Horizontalen oder in einer geneigten Ebene bewegbar, wenn beispielsweise der Eingangsbereich an einem Zugang zu verschließen ist oder für den Zutritt in den Zugang.

Zum Be- und Entladen der Arbeitsstelle ist es erforderlich, das Bauteil 2 entgegen der Verstellrichtung 5 anzuheben. Zu diesem Zweck ist das Bauteil 2 in zwei C- oder U-förmig ausgestalteten Profilschienen 3 und 4 verschiebbar gehalten, die parallel und beabstandet zueinander ausgerichtet sind.

Des Weiteren ist eine Servoeinrichtung 11, beispielsweise in Form eines Elektromotors, vorgesehen, durch die ein Keilriemen 12 angetrieben ist. An dem Keilriemen 12 ist an einer vorgegebenen Position die Vorrichtung 1 angebracht, die somit trieblich mit dem Keilriemen 12 und dem Bauteil 2 verbunden ist. Durch die Rotation des Keilriemens 12 wird demnach das Bauteil 2 in den Profilschienen 3 und 4 auf und ab bewegt. Im Bereich eines Bodens 28 der Arbeitsstelle ist dabei ein Umlenkrad 10 vorgesehen, durch das der Keilriemen 12 geführt gehalten ist.

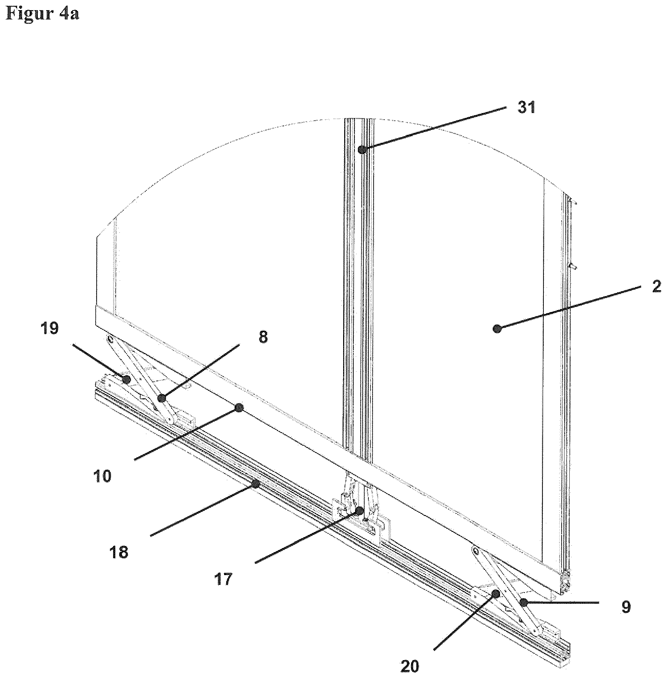

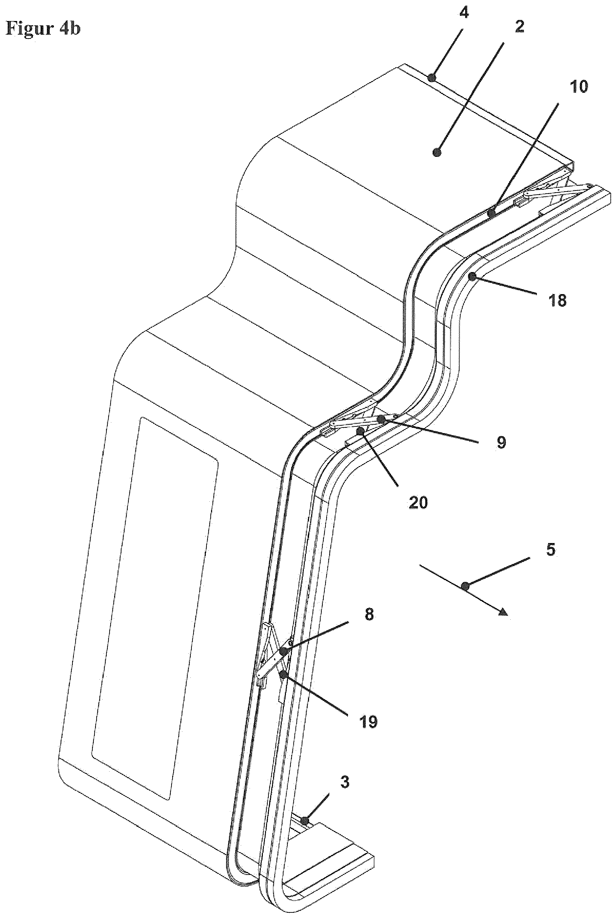

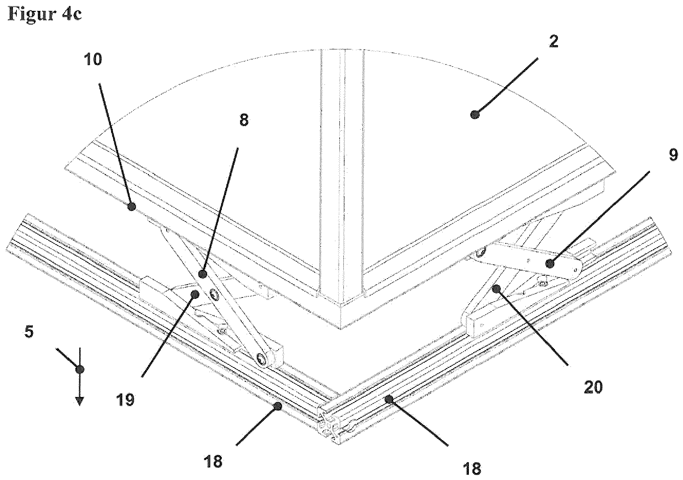

Falls während des Schließvorganges des Bauteils 2, also bei der Bewegung in die Verstellrichtung 5, ein Bedienpersonal unsachgemäß die Arbeitsstelle der Werkzeugmaschine bedient und beispielsweise in diese eingreift und folglich ein Hindernis erzeugt, könnte der Arm durch die Bewegung des Bauteils 2 zwischen diesem und einer Schließkante 27 eingeklemmt und verletzt werden. Aus Sicherheitsgründen ist daher das Bauteil 2 unmittelbar dann zu stoppen, wenn dieses während der Verstellbewegung nach unten auf ein Hindernis auftrifft. Zu diesem Zweck ist an der Unterkante des Bauteils 2 eine Kontaktleiste18 angebracht, die nach außen verschwenkbar oder in der Ebene des Bauteils 2 bewegbar an dem Bauteil 2 gelagert ist und an dem eine Winkelschiene 19 als mechanisches Verbindungselement angebracht ist, die mit einer Wippe 20 verbunden ist. Die Wippe 20 ist dabei an der Vorrichtung 1 verschwenkbar gelagert und sobald die Kontaktleiste18, wie dies in den Figuren 4a, 4b und 4c dargestellt ist, nach außen gedrückt oder linear angehoben ist, wird die Wippe 20 nach unten geschoben und ein Sperrglied 21 der Vorrichtung 1 wird zur Arretierung des Bauteils 2 aktiviert. Das Sperrglied 21 besteht dabei aus einer winkelig ausgestalteten Halteplatte, in die eine Öffnung 23 eingearbeitet ist.

Parallel und beabstandet zu einer oder zu beiden Seiten der Profilschienen 3 und 4 ist eine Führungssäule 7 vorgesehen, an der das Sperrglied 21 mit Spiel verläuft. Die Öffnung 23 wird demnach nahezu vollständig von der Führungsstange 7 ausgefüllt; allerdings liegt die Innenseite der Öffnung 23 nicht an der Außenseite der Führungssäule 7 während der Hubbewegung des Bauteils 2 an, so dass keinerlei Berührung im normalen Betriebszustand herrscht und daher auch keinerlei Verschleiß an der Führungssäule 7 oder an der Innenseite der Öffnung 23 entsteht.

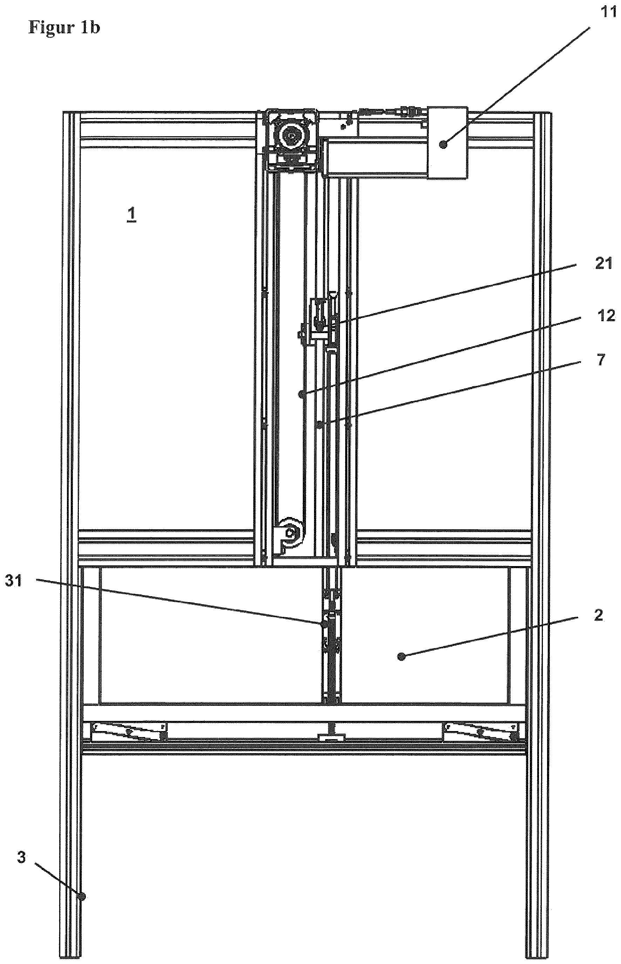

Wird allerdings die Kontaktleiste18 betätigt und nach außen gedrückt oder linear angehoben, erfolgt eine Verstellung des Sperrgliedes 21 derart, dass die Öffnung 23 aus der Horizontalen gekippt ist und somit, wie dies insbesondere in den Figuren 1 b und 1c zu entnehmen ist, eine kraftschlüssige Wirkverbindung zwischen der Führungssäule 7 und dem Sperrglied 21 entsteht, wodurch eine Bremskraft entsteht, durch die die Verstellbewegung des Bauteils 2 gestoppt ist und durch die auf die Führungssäule 7 eine Bremskraft ausgeübt ist.

Um das Sperrglied 21 von der Führungssäule 7 frei zu geben, ist es erforderlich, die Kontaktleiste18 wieder in seine vertikale Ausgangsstellung zu drücken, so dass die an dem Sperrglied 21 vorgesehenen Druckfedern 22 vorgespannt sind. Durch die Druckfedern 22 soll nämlich die zuverlässige Wirkverbindung zwischen dem Sperrglied 21 und der Führungssäule 7 hergestellt sein.

Insbesondere aus den Figuren 1 a und 1 b ist ersichtlich, dass zwischen dem Bauteil 2 und der Kontaktleiste 18 eine schematisch dargestellte Rückholeinrichtung 31 vorgesehen ist. Die Rückholeinrichtung 31 besteht dabei aus einer Zugstange 32, die parallel zu der Bewegungsrichtung 7 des Bauteils 2 verläuft. Die Zugstange 32 ist fest mit der Kontaktleiste 18 verbunden. Die Funktion der Rückholeinrichtung 31 besteht darin, die Kontaktleiste 18 aktiv und schneller als die Zustellgeschwindigkeit des Bauteils 2 in Richtung des Bauteils 2 zu bewegen. Die Kontaktleiste 18 ist dabei beabstandet zu der Unterkante des Bauteils 2 angeordnet, so dass dieser Weg zur Verfügung steht, um das Bauteil 2 zu arretieren, sobald die Kontaktleiste 18 auf ein Hindernis auftrifft.

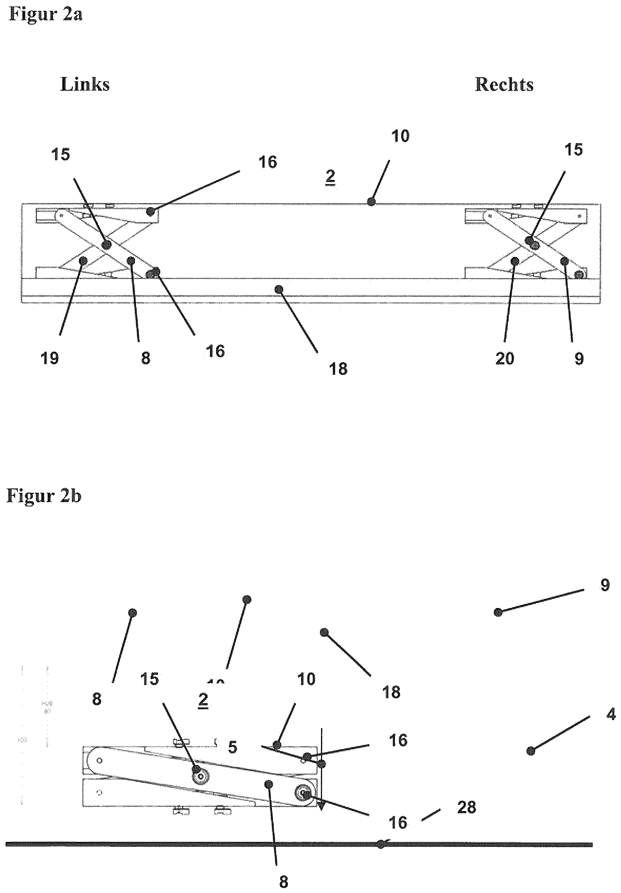

In Figur 2a ist die Aufhängung der Kontaktleiste 18 an der Unterkante des Bauteils 2 zu entnehmen. Zunächst sind zwei zueinander beabstandete und parallel verlaufende Haltearme 8 und 9 vorgesehen, die drehbeweglich an dem Bauteil 2 und der Kontaktleiste 18 mittels jeweils eines Gelenkes 16 angelegt sind. Um eine lineare Anhebung der Kontaktleiste 18 in der von dem Bauteil 2 gebildeten Ebene zu bewerkstelligen, sind zwei Führungsarme 19 und 20 derart angeordnet, dass diese an dem Bauteil 2 und der Kontaktleiste 18 verschwenkbar angelenkt sind und die über einen Knotenpunkt 15 mit dem jeweiligen Haltearm 8 bzw. 9 beweglich verbunden sind. Folglich sind je einer der Führungs- 18, 19 und Haltearme 8, 9 scherenartig miteinander verbunden und, wie dies in Figur 2b zu entnehmen ist, wird beim Anheben der Kontaktleiste 18 diese in der von dem Bauteil 2 gebildeten Ebene bewegt.

Die Haltearme 8, 9 sind bei den in den Figuren 2a bis 3b gezeigten Ausführungsbeispielen in einem Winkel an der Unterkante 10 des Bauteils 2 angelenkt, der kleiner als 90° ist. Dies bezieht sich auf den spitzer ausgestalteten Winkel zwischen dem Bauteil 2 und dem Haltearm 8, 9. Gleiches gilt für die Anlenkung der Führungsarme 19, 20, die gemäß den Figuren 2a und 2b unter einem identischen Anlenlcungswinkel an dem Bauteil 2 befestigt sind, so dass eine Parallelführung der Kontaktleiste 18 durch die zusätzliche Aufhängung der Führungsarme 19, 20 entsteht bzw. eine viertelkreisbogenförmige Aufschwenkung der Kontaktleiste 18 bei deren Betätigung erfolgt, wenn lediglich die Haltearme 8, 9 vorhanden sind.

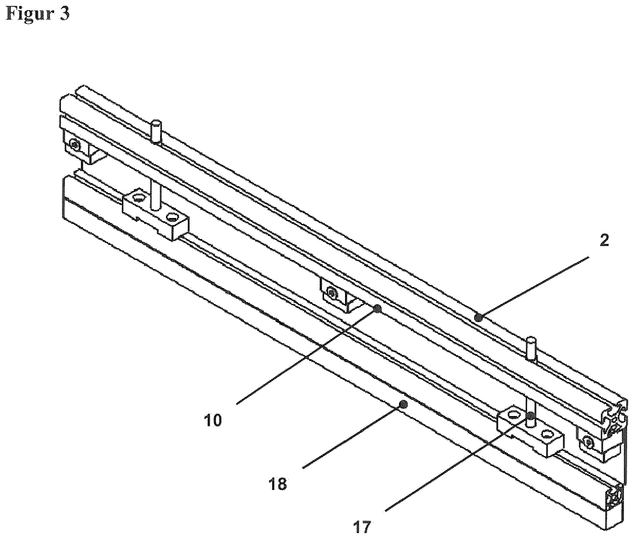

In Figur 3 ist gezeigt, dass die Kontaktleiste 18 auch mittels zweier teleskopartig ineinander gelagerten Stifte 24 an dem Bauteil 2 befestigt werden kann. Die Kontaktleiste 18 wird bekanntlich durch die Rückholeinrichtung 31 im Auslösefalle nach oben gezogen, so dass durch die Aufhängung mittels teleskopartig ineinander gelagerter Stifte 24 eine Bewegung der Kontaktleiste 18 in der von dem Bauteil 2 gebildete Ebene erfolgt.

In den Figuren 4a bis 4c soll gezeigt werden, dass die Kontaktleiste 18 an eine beliebige geometrische Struktur der Unterkante 10 des Bauteils 2 angepasst werden kann, denn die vorstehend erläuterten Aufhängungen erlauben eine Kraftübertragung zwischen Kontaktleisten 18 die nicht in einer Ebene angeordnet sind. Beispielsweise kann die Kontaktleiste 18 bzw. das Bauteil 2 einen U-förmigen Verlauf einnehmen, so dass die Kontaktleiste 18 zwei Eckbereiche aufweist in denen über mechanische Verbindungselemente eine Kraftübertragung mit den jeweils dazu benachbarten Kontaktleisten 18 erfolgt. Unabhängig an welcher Position eine der drei Kontaktleisten 18 nach oben gedrückt wird, erfolgt eine Kraftübertragung über die mechanischen Verbindungselemente 25 an die jeweils anderen Kontaktleisten 18, so dass durch die jeweilige linear geführte Aufhängung der Kontaktleiste eine entsprechende Bewegung entsteht.

Es ist auch denkbar, die Kontaktleiste 18 in verschiedenen Winkeln, die größer oder kleiner als 90 Grad sind oder in einer gebogenen Struktur, also wellenförmig gekrümmt, auszugestalten.
Die Kontaktleiste 18 kann im betätigten Zustand eine der Längsseiten des Bauteils überragen. Ein Anschlag 13, der an der Vorrichtung 1 oder einer der Profilschienen 3, 4 vorgesehen sein kann, setzt den überragenden Teil der Kontaktleiste 18 fest. Dieser Anschlag kann in der Endposition des Bauteils 2 angeordnet sein, so dass das Bauteil 2 durch den Anschlag 13 in der Endposition über eine Wirkverbindung zwischen der Kontaktleiste mit dem Anschlag festgesetzt ist.

Die Kontaktleiste 18 kann in mehreren Teilabschnitten ausgeführt sein, wobei die Verbindung zwischen zwei Teilabschnitten der Kontaktleiste 18 mittels Schrauben, Nuten oder Schalbenschwanzführungen bewerkstelligt sein kann.

## Patentansprüche

1. Vorrichtung (1) zur Arretierung eines verschiebbaren Bauteils (2), insbesondere vor einer abzuschirmenden Arbeits- oder Zutrittsstelle angeordneten Schutz- oder Schiebetür,
- mit ein oder mehreren Profilschienen (3, 4), in denen das Bauteil (2) ein- oder mehrseitig geführt und mittels einer Servoeinrichtung (11) verstellbar ist,
- und mit einer an dem Bauteil (2) angebrachten Kontaktleiste (18), die mit einem Sperrglied (21) oder der Servoeinrichtung (11) über mechanische oder elektrische Verbindungselemente in Wirkverbindung steht,
wobei die Kontaktleiste (18) an dem Bauteil (2) mittels mindestens zweier beweglich an dem Bauteil und der Kontaktleiste (18) angelenkten Haltearmen (8, 9) aufgehängt ist und wobei die Haltearme (8,9) parallel und beabstabdet zueinander verlaufen **dadurch gekennzeichnet,**
**dass** zwei Führungsarme (19,20) an dem Bauteil (2) und der Kontaktleiste (18) verschwenkbar angelenkt sind und über einen Knotenpunkt (15) mit dem jeweiligen Haltearm (8,9) beweglich verbunden sind.

2. Vorrichtung nach Anspruch 1,
**dadurch gekennzeichnet,**
**dass** die Haltearme(8,9) in einem Winkel kleiner als 90° bezogen auf die Unterkante (10) des Bauteils (2) ausgerichtet sind.

3. Vorrichtung nach Anspruch 1 oder 2,
**dadurch gekennzeichnet, dass** der Knotenpunkt (15) des Halte- und des Führungsarmes (8, 9, 19, 20) im unbetätigten Zustand der Kontaktleiste (18) etwa mittig zwischen der Unterkante (10) des Bauteils (2) und der Oberkante der Kontaktleiste (18) angeordnet ist.

4. Vorrichtung nach Anspruch 3,
**dadurch gekennzeichnet,**
**dass** jeder der Führungsarme (19, 20) im unbetätigten Zustand der Kontaktleiste (18) parallel zu dem benachbarten Führungsarm (20, 19) ausgerichtet ist.

5. Vorrichtung nach Anspruch 1,
**dadurch gekennzeichnet,**
**dass** die Kontaktleiste (18) mittels der Aufhängung der Haltearme (8, 9) im betätigten Zustand in der von dem Bauteil (2) gebildeten Ebene in Richtung des Bauteils (2) bewegt ist und eine viertelkreisförmige Verschwenkung um die Aufhängepunkte (16) der jeweiligen Haltearme (8, 9) vollzieht.

6. Vorrichtung nach Anspruch 5,
**dadurch gekennzeichnet,**
**dass** die Kontaktleiste (15) im betätigten Zustand der Kontaktleiste (18) eine der Längsseiten des Bauteils (2) überragt und dass an der Vorrichtung (1) oder einer der Profilschienen (3, 4) der Vorrichtung (1) ein Anschlag (13) vorgesehen ist, durch den der überragende Teil der Kontaktleiste (18) festgesetzt ist.

7. Vorrichtung nach Anspruch 6,
**dadurch gekennzeichnet,**
**dass** der Anschlag (13) im Bereich der Endposition des Bauteils (2) angeordnet ist und dass das Bauteil (2) durch den Anschlag (13) in der Endposition über die Wirkverbindung zwischen der Kontaktleiste (18) und dem Anschlag (13) festgesetzt ist.

8. Vorrichtung nach einem der vorgenannten Ansprüche,
**dadurch gekennzeichnet,**
**dass** die Kontaktleiste (18) linear, gewinkelt und/oder bogenförmig ausgestaltet ist.

9. Vorrichtung nach einem der vorgenannten Ansprüche,
**dadurch gekennzeichnet,**
**dass** die Verbindung zwischen zwei Teilabschnitten von Kontaktleisten (18) mittels Schrauben, Nuten oder Schwalbenschwanzführungen miteinander verbunden sind.

10. vorrichtung nach Anspruch 1,
**dadurch gekennzeichnet,**
**dass** die Haltearme (8, 9) jeweils aus zwei Stiften gebildet sind, die teleskopartig ineinander gelagert sind.

## Claims

1. A device (1) for locking a movable component (2), in particular a protective or sliding door arranged in front of a working or access point to be shielded,
- with one or two profile rails (3, 4) in which the component (2) is guided at one or both sides and which can be adjusted by means of a servo device (11),
- and with a contact strip (18) attached to the component (2) which is in an active connection with a locking element (21) or the servo device (11) via mechanical or electrical connection elements,
in which the contact strip (18) is attached to the component (2) by means of at least two holding arms (8, 9) articulated on the component and the contact strip (18), and in which the holding arms (8, 9) run in parallel to and at a distance from one another,
**characterised in that,**
two guide arms (19, 20) are connected to the component (2) and the contact strip (18) in a swivelling arrangement and are connected in a movable arrangement via a node point (15) to the corresponding holding arm (8, 9).

2. The device in accordance with Claim 1,
**characterised in that,**
the holding arms (8 ,9) are aligned at an angle less than 90° in relation to the bottom edge (10) of the component (2).

3. The device in accordance with Claim 1 or 2,
**characterised in that,**
the node point (15) of the holding and the guide arm (8, 9, 19, 20) is arranged approximately centrally in between the bottom edge (10) of the component (2) and the top edge of the contact strip (18) when the contact strip (18) is not actuated.

4. The device in accordance with Claim 3,
**characterised in that,**
When the contact strip (18) is not actuated, each of the guide arms (19, 20) is aligned in parallel with the adjacent guide arm (20, 19).

5. The device in accordance with Claim 1,
**characterised in that,**
when actuated, the contact strip (18) is moved towards the component (2) by means of the suspension of the holding arms (8, 9) in the plane formed by the component (2) and performs a quadrant-shaped swivelling movement about the suspension points (16) of the corresponding holding arms (8, 9).

6. The device in accordance with Claim 5,
**characterised in that,**
when the contact strip (18) actuated, the contact strip (18) protrudes beyond one of the long sides of the component (2) and that a stop is provided on the device (1) or one of the profile rails (3, 4) of the device (1) by means of which the protruding portion of the contact strip (18) is secured.

7. The device in accordance with Claim 6,
**characterised in that,**
the stop (13) is arranged in the area of the end position of the component (2) and that the component (2) is secured by the stop (13) in the end position by means of the active connection between the contact strip (18) and the stop (13).

8. The device in accordance with one of the aforementioned claims,
**characterised in that,**
the contact strip (18) is configured with a linear, angled and/or curved shape.

9. The device in accordance with one of the aforementioned claims,
**characterised in that,**
the connection between two subsections of contact strips (18) is made by means of screws, grooves or dovetailed guides.

10. The device in accordance with Claim 1,
**characterised in that,**
each of the holding arms (8, 9) is formed from pins which are pointed one inside the other in a telescoping arrangement.

## Revendications

1. Dispositif (1) servant au blocage d'un élément de construction mobile (2), en particulier d'une porte de protection ou une porte glissante montée devant une place de travail ou un point d'accès à protéger,
- avec une ou plusieurs glissières profilées (3, 4) dans lesquelles l'élément de construction (2) est guidé sur un ou sur plusieurs côtés et se laisse régler à l'aide d'un servomécanisme (11),
- et avec une réglette de contact (18) montée sur l'élément de construction (2) et qui, moyennant des éléments de raccordement mécaniques ou électriques, est liée par entraînement à un élément d'arrêt (21) ou au servomécanisme (11),
la réglette de contact (18) étant accrochée à l'élément de construction (2) à l'aide d'au moins deux bras de retient mobiles (8, 9) articulés sur l'élément de construction ou sur la réglette de contact (18), et les bras de retient (8, 9) étant montés parallèles et espacés l'un de l'autre,
**caractérisé en ce que**
deux bras de guidage (19, 29) sont articulés de manière pivotante sur l'élément de construction (2) et sur la réglette de contact (18), et raccordés de manière mobile au bras de guidage respectif (19, 29) par l'intermédiaire d'un point nodal (15).

2. Dispositif d'après la revendication 1,
**caractérisé en ce que**
les bras de retient (8, 9) sont orientés sous un angle inférieur à 90° par rapport au bord inférieur (10) de l'élément de construction (2).

3. Dispositif d'après les revendications 1 ou 2,
**caractérisé en ce que**,
tant que la réglette de contact (18) n'est pas activée, le point nodal (15) du bras de retient ou de guidage (8, 9, 19, 20) se trouve à peu près au centre entre le bord inférieur (10) de l'élément de construction (2) et le bord supérieur de la réglette de contact (18).

4. Dispositif d'après la revendication 3,
**caractérisé en ce que**,
tant que la réglette de contact (18) n'est pas activée, chacun des bras de guidage (19, 20) est aligné parallèle au bras de guidage voisin (19, 20).

5. Dispositif d'après la revendication 1,
**caractérisé en ce que**,
grâce à la suspension des bras de retient (8, 9), la réglette de contact activée (18) est déplacée dans le plan formé par l'élément de construction (2) en direction de cet l'élément de construction (2), et est pivoté d'un quart de cercle autour des points de suspension (16) des bras de retient respectifs (8,9).

6. Dispositif d'après la revendication 5,
**caractérisé en ce que**
lorsque la réglette de contact est activée (18), la réglette de contact (18) dépasse une des faces latérales de l'élément de construction (2), et que sur le dispositif (1) ou sur une des glissières profilées (3, 4) du dispositif (1), il est prévu une butée (13) servant à limiter la partie dépassante de la réglette de contact (18).

7. Dispositif d'après la revendication 6,
**caractérisé en ce que**
la butée (13) et prévue au niveau de la position finale de l'élément de construction (2), et que l'élément de construction (2) est positionné par la butée (13) en position finale par l'intermédiaire du raccordement par entraînement entre la réglette de contact (18) et la butée (13).

8. Dispositif d'après une des revendications précédentes,
**caractérisé en ce que**
la réglette de contact (18) a une forme linéaire, angulaire et/ou en arc.

9. Dispositif d'après une des revendications précédentes,
**caractérisé en ce que**
le raccordement entre deux sections partielles des réglettes de contact (18) est réalisé au moyen de vis, de rainures ou de guidages en queue d'aronde.

10. Dispositif d'après la revendication 1,
**caractérisé en ce que**
les bras de retient respectifs (8, 9) sont formés par deux goujons télescopiques logés l'un dans l'autre.
